(19) Europäisches Patentamt / European Patent Office / Office européen des brevets

(11) **EP 3 681 749 B1**

(12) **EUROPÄISCHE PATENTSCHRIFT**

(45) Veröffentlichungstag und Bekanntmachung des Hinweises auf die Patenterteilung:
**08.03.2023 Patentblatt 2023/10**

(21) Anmeldenummer: **18766148.3**

(22) Anmeldetag: **28.08.2018**

(51) Internationale Patentklassifikation (IPC):
**B60K 7/00** (2006.01) **B60L 3/10** (2006.01)
**B60T 8/1761** (2006.01)

(52) Gemeinsame Patentklassifikation (CPC):
**B60T 8/17616; B60K 7/0007; B60L 3/0038;
B60L 3/104; B60T 8/175**

(86) Internationale Anmeldenummer:
**PCT/EP2018/073139**

(87) Internationale Veröffentlichungsnummer:
**WO 2019/052807 (21.03.2019 Gazette 2019/12)**

(54) **VERFAHREN UND VORRICHTUNG ZUR BESTIMMUNG EINER RADSCHLUPFINFORMATION EINES ELEKTRISCH ANGETRIEBENEN RADES EINES KRAFTFAHRZEUGS**

METHOD AND DEVICE FOR DETERMINING WHEEL SLIP INFORMATION OF AN ELECTRICALLY DRIVEN WHEEL OF A MOTOR VEHICLE

PROCÉDÉ ET DISPOSITIF POUR DÉTERMINER UNE INFORMATION DE PATINAGE D'UNE ROUE À ENTRAÎNEMENT ÉLECTRIQUE D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.09.2017 DE 102017216020**

(43) Veröffentlichungstag der Anmeldung:
**22.07.2020 Patentblatt 2020/30**

(73) Patentinhaber: **Audi AG**
**85045 Ingolstadt (DE)**

(72) Erfinder:
• **BROK, Tobias**
**85092 Kösching (DE)**
• **ERNST, Herbert**
**02906 Niesky (DE)**

(56) Entgegenhaltungen:
EP-A1- 3 020 598          WO-A1-2015/093381
DE-A1-102010 062 646      US-A1- 2014 343 772
US-A1- 2017 247 035

**Beschreibung**

Die Erfindung betrifft ein Verfahren zur Bestimmung einer Radschlupfinformation eines elektrisch angetriebenen Rades eines Kraftfahrzeugs, insbesondere nach einem Ausfall eines dem Rad zugeordneten Raddrehzahlsensors, gemäß der im Patentanspruch 1 und 2 angegebenen Art.

Um die Fahrzeugstabilität bzw. Lenkbarkeit des Kraftfahrzeugs auch auf rutschigen Untergründen zu gewährleisten, sind Informationen bzgl. des Schlupfes am Rad notwendig. Heutige ABS/ESC-Systeme nutzen Raddrehzahlinformationen um festzustellen, welches Rad sich wie weit im Schlupf befindet.

Fällt ein oder mehrere Raddrehzahlsensoren aus, so wird dies heute dem Fahrer angezeigt (Bewarnung durch ABS/ESC-Lampe) und dem Fahrer die Verantwortung übertragen das Fahrzeug sicher zu führen oder abzustellen. Insbesondere im Hinblick auf die Funktion eines pilotierten bzw. (teil)autonomen Fahrens, hätte das zur Konsequenz, dass die Funktion des pilotierten bzw. (teil)autonomen Fahrens kurzfristig deaktiviert werden müsste, da aufgrund der fehlenden Information über den Radschlupf das Fahrzeug in eine sicherheitskritische Fahrsituation geraten könnte, die vom System nicht mehr beherrscht werden könnte.

Ein gattungsgemäßes, sämtliche Merkmale des Oberbegriffs des Patentanspruches 1 aufweisendes Verfahren zur Bestimmung einer Radschlupfinformation eines elektrisch angetriebenen Rades eines Kraftfahrzeugs, ist aus der US 2017/0247035 A1 bekannt. Ein ähnliches Verfahren wird zudem noch in der EP 3 020 598 A1 beschrieben

Der Erfindung liegt die Aufgabe zu Grunde ein Verfahren anzugeben, mittels dem im Falle eines Ausfalls eines Raddrehzahlsensors eine Ersatzinformation über die Haftungssituation (Schlupf) der Räder des Kraftfahrzeugs generiert werden kann.

Diese Aufgabe wird durch die Merkmale der Patentansprüche 1 und 2 gelöst.

Die Unteransprüche 2 bis 6 bilden vorteilhafte Weiterbildungen des erfindungsmäßen Verfahrens.

Gemäß dem Verfahren zur Bestimmung einer Radschlupfinformation eines elektrisch angetriebenen Rades eines Kraftfahrzeugs wird die während der Fahrt des Kraftfahrzeugs erfasste Drehzahl des Elektromotors für die Bestimmung der Raddrehzahl verwendet.

Durch das Verfahren ist nunmehr in vorteilhafter Weise gewährleistet, dass auch im Falle eines Ausfalls eines Raddrehzahlsensors eine Ersatz-Schlupf-Information generiert werden kann. D. h. es wird mittels des erfindungsgemäßen Verfahrens eine redundante Radschlupfinformation zur Verfügung gestellt. Das hat den positiven Effekt, dass - da nunmehr eine Ersatz-Schlupf-Information zur Verfügung steht - im Falle eines pilotierten bzw. (teil)autonomen Fahrens eine Deaktivierung nicht zwingend erforderlich ist.

Gemäß Patentanspruch 1 ist dabei jedem Rad des Kraftfahrzeugs ein Elektromotor zugeordnet, d. h. jedes Rad des Kraftfahrzeugs wird über einen separaten Elektromotor angetrieben. In diesem Fall ist nach dem erfindungsgemäßen Verfahren vorgesehen, dass zur Bestimmung bzw. Generierung der Ersatz-Radschlupf-Information aus der während der Fahrt erfassten Drehzahl des Elektromotors $n_{E-Motor}$ sowie - sofern zwischen der Abtriebswelle des Elektromotors und der Antriebswelle des Rades ein Getriebe angeordnet ist - der Getriebeübersetzung $i_G$ eine theoretische Raddrehzahl $n_{Rad,theo}$ des Rades gemäß der Vorschrift

$$n_{Rad,theo} = \frac{n_{E-Motor}}{i_G}$$

bestimmt wird. Für den Fall, dass zwischen der Abtriebswelle des Elektromotors und der Antriebswelle des Rades kein Getriebe angeordnet ist, ist in obiger Gleichung ic=1 zu setzen. Anschließend wird aus der ebenfalls während der Fahrt des Kraftfahrzeugs erfassten aktuellen Fahrzeuggeschwindigkeit $V_{Fahrzeug}$ des Kraftfahrzeugs eine theoretische Ist-Raddrehzahl $n_{Rad,Ist}$ des Rads gemäß der Vorschrift

$$n_{Rad,Ist} = \frac{V_{Fahrzeug}}{\pi \, d_{Rad}} \quad wobei \; d_{Rad} = Durchmesser \; des \; Rades$$

bestimmt. In einem letzten Schritt wird in einer Regel-/Steuereinheit ein Vergleich durchgeführt, indem die ermittelte theoretische Raddrehzahl $n_{Rad,theo}$ mit der ermittelten Ist-Raddrehzahl $n_{Rad,Ist}$ verglichen wird. Ergibt der Vergleich, dass die ermittelte theoretische Raddrehzahl $n_{Rad,theo}$ signifikant von der ermittelten Ist-Raddrehzahl $n_{Rad,Ist}$ abweicht, so wird als Radschlupfinformation bestimmt, dass das betroffene Rad sich im Schlupf befindet.

Gemäß Patentanspruch 2 werden die Räder einer Achse über einen gemeinsamen Elektromotor angetrieben und zwischen den Rädern der Achse ist ein Achsdifferential angeordnet. Die Übersetzung des Achsdifferentials ist nachfolgende als $i_A$ bezeichnet. Gegebenenfalls kann zudem zwischen der Abtriebswelle des Elektromotors und Eingangswelle zum Achsdifferential ein Getriebe mit der Getriebeübersetzung $i_G$ angeordnet sein (sofern kein Getriebe =>

$i_G$=1). Verfahrensgemäß ist in diesem Fall vorgesehen, dass zur Bestimmung bzw. Generierung der Ersatz-Radschlupf-Information während der Fahrt des Kraftfahrzeugs neben der Drehzahl des Elektromotors ne-motor auch eine aus dem Achsdifferential bedingte Drehzahldifferenz $\Delta n$ zwischen den Rädern der Achse erfasst wird, und dass aus der erfassten Drehzahl $n_{E\text{-motor}}$ des Elektromotors, der erfassten Drehzahldifferenz $\Delta n$ sowie der Achsdifferentialübersetzung $i_A$ und - sofern ein Getriebe vorhanden ist - der Getriebeübersetzung $i_G$ für beide Räder der Achse eine theoretische Raddrehzahl $n_{Rad,theo}$ gemäß der Vorschrift

$$n_{Rad,theo} = \frac{1}{2}\left( \frac{n_{E-Motor}}{i_G \, i_A} \pm \Delta n \right)$$

bestimmt wird. Aus der während der Fahrt des Kraftfahrzeugs erfassten aktuellen Fahrzeuggeschwindigkeit $V_{Fahrzeug}$ werden in einem nächsten Schritt die theoretischen Ist-Raddrehzahlen der Räder $n_{Rad,Ist}$ der Achse bestimmt. Dies erfolgt gemäß der Vorschrift:

$$n_{Rad,Ist} = \frac{V_{Fahrzeug}}{\pi \, d_{Rad}} \quad wobei \; d_{Rad} = Durchmesser \; des \; Rades$$

Anschließend wird in einer Regel-/Steuereinheit ein Vergleich durchgeführt, indem die ermittelte theoretische Raddrehzahl $n_{Rad,theo}$ der Räder der Achse mit der der ermittelten theoretischen Ist-Raddrehzahl $n_{Rad,Ist}$ verglichen wird. Ergibt der Vergleich, dass die ermittelte theoretische Raddrehzahl $n_{Rad,theo}$ eines oder beider Räder signifikant von der ermittelten Ist-Raddrehzahl $n_{Rad,Ist}$ abweicht, so wird als Radschlupfinformation bestimmt, dass das betroffene Rad oder beide Räder der Achse sich im Schlupf befinden.

Die Erfassung der Drehzahldifferenz $\Delta n$ zwischen den Rädern einer Achse kann auf verschiedene Arten erfolgen, z. B. durch einen separaten, hierzu speziell vorgesehenen Sensor. Alternativ ist es auch möglich die Drehzahldifferenz $\Delta n$ anhand einer sonstigen, noch vorhandenen weiteren Stützinformation zu berechnen, z. B. in der Gestalt, dass - da in der Regel die Raddrehzahlsensoren der Räder einer Achse nicht gleichzeitig ausfallen und damit an der Achse eine Referenzinformation zu Verfügung steht - aus der Drehzahl der Eingangswelle zum Achsdifferential und der Stützinformation des nicht ausgefallen Raddrehzahlsensors die Drehzahldifferenz $\Delta n$ bestimmt wird.

Vorzugsweise werden bei beiden geschilderten Ausführungsformen zudem noch die ermittelten theoretischen Raddrehzahlen der Räder einer Achse miteinander verglichen. Ergibt z. B. der Vergleich für die Räder einer Achse, dass $n_{Rad,links,theo} > n_{Rad,rechts,theo}$, so ist das ein Indiz, dass im Falle einer Beschleunigung oder Fahrt mit konstanter Geschwindigkeit, das linke Rad sich im Schlupf befindet und abgebremst werden muss bzw. im Falle einer Verzögerung, d. h. einer aktiven Bremsung oder Motorschub-Rekuperation, dass das rechte Rad blockiert und der Druck aus der Bremse genommen werden muss bzw. der Motorschub/die Rekuperation zurückgenommen werden muss.

Bevorzugt wird die Drehzahl des Elektromotors aus dem Stromverlauf, und/oder Spannungsabfall und/oder aus Informationen der Motoransteuerung bestimmt. Eine alternative Ausführungsform sieht vor, dass die Drehzahl des Elektromotors über einen Sensor, z. B. in Form eines Hall-Sensors, bestimmt wird.

Gemäß einer weiteren vorteilhaften Ausführungsform des erfindungsgemäßen Verfahrens liegt eine signifikante Abweichung der ermittelten theoretischen Raddrehzahl $n_{Rad,theo}$ von der ermittelten Ist-Raddrehzahl $n_{Rad,Ist}$ vor, wenn für die Raddrehzahlen gilt:

$$n_{Rad,Ist} \leq 0.9 \, n_{Rad,theo} \quad oder \quad n_{Rad,Ist} \geq 1.1 \, n_{Rad,theo}$$

Eine Vorrichtung zur Durchführung des erfindungsgemäßen Verfahrens zur Bestimmung einer Radschlupfinformation eines elektrisch angetriebenen Rades eines Kraftfahrzeugs umfasst einen Elektromotor zum Antrieb des Rades, einen dem Rad zugeordneten Raddrehzahlsensor sowie Mittel zur Erfassung der Drehzahl des Elektromotors. Weiterhin umfasst die Vorrichtung eine Regel-/Steuereinheit, der als Eingangssignale die aktuelle Kraftfahrzeuggeschwindigkeit sowie die Ausgangsignale des dem Rad zugeordneten Raddrehzahlsensors zur Verfügung gestellt werden. Erfindungsgemäß werden der Regel/Steuereinheit als weitere Eingangsgröße noch die erfassten Daten über die Drehzahl des Elektromotors zur Verfügung gestellt.

Aufgrund der nunmehr der Regel-Steuereinheit als weitere Eingangsgröße zur Verfügung gestellten Information über die Drehzahl des Elektromotors, ist die Bestimmung einer redundanten Radschlupfinformation ermöglicht.

Vorzugsweise sind die Mittel zur Erfassung der Drehzahl des Elektromotors derart ausgebildet, dass diese die Drehzahl des Elektromotors aus dem Stromverlauf, und/oder Spannungsabfall und/oder aus Informationen der Motoransteuerung generieren.

Eine alternative Ausgestaltung sieht vor, dass die Mittel zur Erfassung der Drehzahl des Elektromotors in Form eines separaten Sensors ausgebildet sind.

Weitere Vorteile und Anwendungsmöglichkeiten der vorliegenden Erfindung ergeben sich aus der nachfolgenden Beschreibung in Verbindung mit dem in der Zeichnung dargestellten Ausführungsbeispiel.

In der Zeichnung bedeutet:

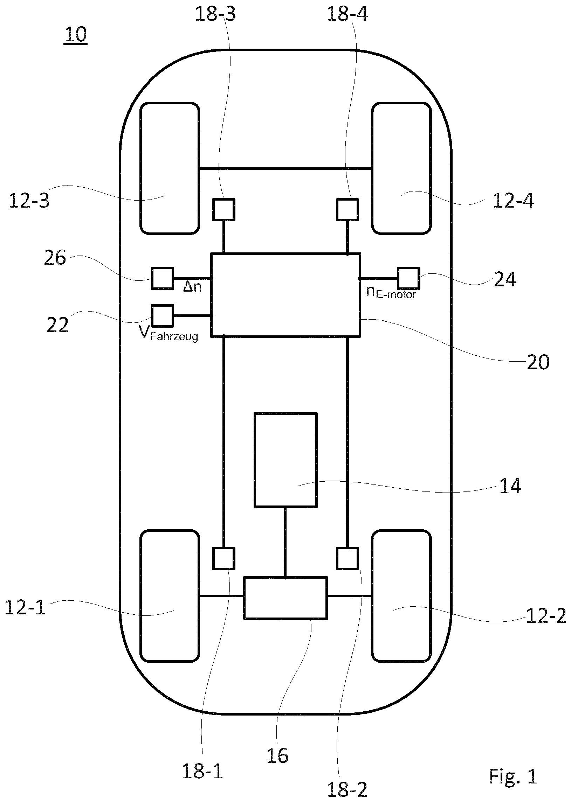

Fig. 1 eine schematische Darstellung eines Kraftfahrzeugs zur Verdeutlichung des Verfahrens zur Bestimmung einer redundanten Radschlupfinformation eines elektrisch angetriebenen Rades eines Kraftfahrzeugs.

Fig. 1 zeigt in einer schematischen Darstellung ein insgesamt mit der Bezugsziffer 10 bezeichnetes Kraftfahrzeug. Vorliegend sind die hinteren Räder 12-1 und 12-2 mittels eines Elektromotors 14 angetrieben, die Räder 12-3 und 12-4 der Vorderachse sind nicht angetrieben. Zwischen den Rädern 12-1, 12-2 der Hinterachse ist in bekannter Art und Weise ein mit der Bezugsziffer 16 bezeichnetes Achsdifferential angeordnet. Zudem ist jedem Rad 12-1, 12-2, 12-3, 12-4 des Kraftfahrzeugs 10 ein Raddrehzahlsensor 18-1, 18-2, 18-3 und 18-4 zugeordnet, um festzustellen, welches Rad sich wie weit im Schlupf befindet. Auf Grundlage dieser Information wird geregelt, d. h. das Rad, welches sich im Schlupf befindet wird i. d. R. abgebremst.

Fällt nun z. B. der Raddrehzahlsensor 18-1 aus, so hat dies zur Folge, dass am Rad 12-1 eine Schlupfregelung nicht mehr möglich ist. Insbesondere im Hinblick auf zukünftige Funktionen, wie z. B. pilotiertes bzw. (teil)autonomes Fahren, hätte das zur Konsequenz, dass derartige Funktionen zumindest kurzfristig deaktiviert müssten, da aufgrund des Ausfalls des Raddrehzahlsensors 18-1 am Rad 12-1 eine Schlupfregelung nicht mehr möglich ist, und somit das Kraftfahrzeug 10 in eine sicherheitskritische Fahrsituation geraten könnte.

Genau hier setzt nun die Erfindung ein: Wie Fig. 1 zeigt, ist eine Regel- /Steuereinheit 20 vorgesehen, der als Eingangsgrößen neben den Ausgangssignalen der Raddrehzahlsensoren 18-1, 18-2, 18-3 und 18-4, auch noch - wie schematisch angedeutet - die aktuelle Fahrzeuggeschwindigkeit $V_{Fahrzeug}$ vgl. Bezugsziffer 22, die Drehzahl $n_{E-Motor}$ der Elektromotors 20, vgl. Bezugsziffer 24, als auch die aus dem Achsdifferential 16 bedingte Drehzahldifferenz $\Delta n$ zwischen den Rädern 12-1, 12-2 der Hinterachse, vgl. Bezugsziffer 26, zur Verfügung gestellt werden.

Für die nachfolgende Erläuterung des Verfahrens wird angenommen, dass der dem linken Hinterrad 12-1 zugeordnete Raddrehzahlsensor 18-1 ausgefallen ist.

In einem ersten Verfahrensschritt wird nunmehr von der Regel-Steuereinheit 14 die aufgrund der Leistungsabgabe vom Elektromotor 16 bedingte theoretische Raddrehzahl $n_{Rad,links,theo}$ des linken Hinterrades 12-1 berechnet:

$$n_{Rad,links,theo} = \frac{1}{2}\left( \frac{n_{E-Motor}}{i_G \, i_A} \pm \Delta n \right)$$

wobei vorliegend - da zwischen Elektromotor 16 und Achsdifferential kein Getriebe angeordnet ist, ic = 1 ist, und der Wert der Achsdifferentialübersetzung $i_A$ in der Steuereinheit hinterlegt ist.

In einem zweiten Schritt wird in der Regel-/Steuereinheit 14 aus der Fahrzeuggeschwindigkeit $V_{Fahrzeug}$ die theoretische Ist-Raddrehzahl $n_{Rad,links,Ist}$ des linken Hinterrads 12-1 bestimmt:

$$n_{Rad,links,Ist} = \frac{V_{Fahrzeug}}{\pi \, d_{Rad}}$$

wobei der Durchmesser des Rades $d_{Rad}$ als Wert in der Steuereinheit hinterlegt ist.

In einem dritten Schritt wird nun zur Ermittlung einer Ersatz-Radschlupf-Information in der Regel-Steuereinheit 14 ein Vergleich der ermittelten Raddrehzahlen des linken Hinterrades 12-1 durchgeführt, d. h. die ermittelte theoretische Raddrehzahl $n_{Rad,links,theo}$ wird mit der ermittelten theoretischen Ist-Raddrehzahl $n_{Rad,links,Ist}$ verglichen.

Vorliegend hat der Vergleich ergeben, dass für das Rad 12-1 die Ist-Raddrehzahl $n_{Rad,links,Ist}$ um einen Faktor 2 und damit signifikant größer als die theoretischen Raddrehzahl $n_{Rad,links,theo}$ ist.

Aufgrund der festgestellten, signifikant erhöhten Ist-Raddrehzahl $n_{Rad,links,Ist}$ des linken Hinterrads 12-1 wird nun als Ersatz-Schlupf-Information bestimmt, dass das Rad 12-1 durchdreht und sich damit im Schlupf befindet, mit der Konsequenz, dass die Regel-/Steuereinheit eine Schlupfregelung veranlasst, indem das betroffene Rad 12-1 abgebremst wird.

Somit wird, wie dargelegt, durch das erfindungsgemäße Verfahren ermöglicht, dass insbesondere auch nach Ausfall eines Raddrehzahlsensors eine Ersatz-Schlupf-Information generiert werden kann.

**Patentansprüche**

1. Verfahren zur Bestimmung einer Radschlupfinformation eines elektrisch angetriebenen Rades (12-1, 12-2, 12-3, 12-4) eines Kraftfahrzeugs (10), gemäß dem während der Fahrt die Drehzahl ($n_{E\text{-motor}}$) eines das Rad (12-1, 12-2, 12-3, 12-4) antreibenden Elektromotors (16) erfasst wird und die erfasste Drehzahl ($n_{E\text{-motor}}$) des Elektromotors (16) für die Bestimmung der Radschlupfinformation verwendet wird, **dadurch gekennzeichnet, dass** jedem elektrisch angetriebenen Rad (12-1, 12-2, 12-3, 12-4) ein separater Elektromotor (14) zugeordnet ist, wobei aus der erfassten Drehzahl ($n_{E\text{-motor}}$) des Elektromotors (14) und Getriebeübersetzung ($i_G$) eine theoretische Raddrehzahl ($n_{Rad,theo}$) des Rades (12-1, 12-2, 12-3, 12-4) bestimmt wird, und wobei aus der aktuellen Fahrgeschwindigkeit ($V_{Fahrzeug}$) des Kraftfahrzeugs (10) eine Ist-Raddrehzahl ($n_{Rad,Ist}$) des Rades (12-1, 12-2, 12-3, 12-4) bestimmt wird, wobei im Falle, dass die theoretische Raddrehzahl ($n_{Rad,theo}$) des Rades (12-1, 12-2, 12-3, 12-4) von der Ist-Raddrehzahl ($n_{Rad,Ist}$) des Rades (12-1, 12-2, 12-3, 12-4) abweicht als Radschlupfinformation bestimmt wird, dass das Rad (12-1, 12-2, 12-3, 12-4) sich im Schlupf befindet.

2. Verfahren zur Bestimmung einer Radschlupfinformation eines elektrisch angetriebenen Rades (12-1, 12-2, 12-3, 12-4) eines Kraftfahrzeugs (10), gemäß dem während der Fahrt die Drehzahl ($nE$ -motor) eines das Rad (12-1, 12-2, 12-3, 12-4) antreibenden Elektromotors (16) erfasst wird und die erfasste Drehzahl ($nE$ -motor) des Elektromotors (16) für die Bestimmung der Radschlupfinformation verwendet wird, **dadurch gekennzeichnet, dass**

   die Räder (12-1, 12,2, 12-3, 12-4) einer Achse über einen gemeinsamen Elektromotor (14) und ein Achsdifferential (16) angetrieben werden und eine aus dem Achsdifferential (16) bedingte Drehzahldifferenz ($\Delta n$) zwischen den Rädern (12-1, 12,2, 12-3, 12-4) der Achse erfasst wird, wobei aus der erfassten Drehzahl ($n_{E\text{-motor}}$) des Elektromotors (16), der Drehzahldifferenz ($\Delta n$) sowie der Getriebe- und Achsdifferentialübersetzung ($i_G$, $i_A$) für beide Räder (12-1, 12,2, 12-3, 12-4) der Achse eine theoretische Raddrehzahl ($n_{Rad,theo}$) bestimmt wird, und wobei aus der aktuellen Fahrgeschwindigkeit ($V_{Fahr\text{-}zeug}$) des Kraftfahrzeugs (10) eine Ist-Raddrehzahl ($n_{Rad,Ist}$) der Räder (12-1, 12,2, 12-3, 12-4) der Achse bestimmt wird, wobei im Falle das die theoretische Radrehzahl ($n_{Rad,theo}$) eines oder beider Räder (12-1, 12,2 / 12-3, 12-4) von der Ist-Raddrehzahl ($n_{Rad,Ist}$) abweicht als Radschlupfinformation bestimmt, dass das betroffene Rad oder beide Räder (12-1, 12,2 / 12-3, 12-4) der Achse sich im Schlupf befinden, wobei die theoretische Raddrehzahl ($n_{Rad,theo}$) der Räder (12-1, 12,2, 12-3, 12-4) der Achse gemäß der Vorschrift

$$n_{Rad,theo} = \frac{1}{2}\left(\frac{n_{E\text{-}Motor}}{i_G \; i_A} \pm \Delta n\right)$$

   und
   die Ist-Raddrehzahl ($n_{Rad,Ist}$) der Räder (12-1, 12,2, 12-3, 12-4) der Achse gemäß der Vorschrift

$$n_{Rad,Ist} = \frac{V_{Fahrzeug}}{\pi \, d_{Rad}} \quad wobei \; d_{Rad} = Durchmesser \; des \; Rades$$

   berechnet wird.

3. Verfahren nach Anspruch 1 oder 2, **dadurch gekennzeichnet, dass** die Drehzahl ($n_{E\text{-motor}}$) des Elektromotors (14) aus dem Stromverlauf, und/oder Spannungsabfall und/oder aus Informationen der Motoransteuerung bestimmt wird.

4. Verfahren nach Anspruche 1 oder 2, **dadurch gekennzeichnet, dass** die Drehzahl ($n_{E\text{-motor}}$) des Elektromotors (14) über einen Sensor bestimmt wird.

5. Verfahren nach Anspruch 1, **dadurch gekennzeichnet, dass**

die theoretische Raddrehzahl ($n_{Rad,theo}$) des Rades (12-1, 12,2, 12-3, 12-4) gemäß der Vorschrift

$$n_{Rad,theo} = \frac{n_{E-Motor}}{i_G}$$

und

die Ist-Raddrehzahl ($n_{Rad,Ist}$) des Rades (12-1, 12,2 / 12-3, 12-4) gemäß der Vorschrift

$$n_{Rad,Ist} = \frac{V_{Fahrzeug}}{\pi\, d_{Rad}} \quad wobei\; d_{Rad} = Durchmesser\; des\; Rades$$

berechnet wird.

6. Verfahren nach Anspruch 1 oder 2,
   **dadurch gekennzeichnet, dass**
   eine Abweichung der Ist-Raddrehzahl ($n_{Rad,Ist}$) von der theoretischen Raddrehzahl vorliegt, wenn für Raddrehzahlen gilt:

$$n_{Rad,Ist} \leq 0.9\, n_{Rad,theo} \quad oder \quad n_{Rad,Ist} \geq 1.1\, n_{Rad,theo}.$$

**Claims**

1. Method for determining wheel slip information about an electrically driven wheel (12-1, 12- 2, 12-3, 12-4) of a motor vehicle (10), according to which, during travel the speed ($n_{E-motor}$) of an electric motor (16) driving the wheel (12-1, 12-2, 12-3, 12-4) is detected and the detected speed ($n_{E-motor}$) of the electric motor (16) is used to determine the wheel slip information, **characterised in that**
   each electrically driven wheel (12-1, 12-2, 12-3, 12-4) is assigned a separate electric motor (14), wherein a theoretical wheel speed ($n_{wheel,theo}$) of the wheel (12-1, 12-2, 12-3, 12-4) is determined from the detected speed ($n_{E-motor}$) of the electric motor (14) and from the gear ratio ($i_G$), and wherein an actual wheel speed ($n_{wheel,actual}$) of the wheel (12-1, 12-2, 12-3, 12-4) is determined from the current driving speed ($V_{vehicle}$) of the motor vehicle (10), wherein if the theoretical wheel speed ($n_{wheel,theo}$) of the wheel (12-1, 12-2, 12-3, 12-4) deviates from the actual wheel speed ($n_{wheel,actual}$) of the wheel (12-1, 12-2, 12-3, 12-4), it is determined as wheel slip information that the wheel (12-1, 12-2, 12-3, 12-4) is slipping.

2. Method for determining wheel slip information about an electrically driven wheel (12-1, 12- 2, 12-3, 12-4) of a motor vehicle (10), according to which, during travel the speed (nE-motor) of an electric motor (16) driving the wheel (12-1, 12-2, 12-3, 12-4) is detected and the detected speed (nE-motor) of the electric motor (16) is used to determine the wheel slip information,
   **characterised in that**

   the wheels (12-1, 12,2, 12-3, 12-4) of an axle are driven by means of a common electric motor (14) and an axle differential (16), and a speed difference ($\Delta n$) between the wheels (12-1, 12,2, 12-3, 12-4) of the axle, which speed difference is caused by the axle differential (16), is detected, wherein a theoretical wheel speed ($n_{wheel,theo}$) is determined from the detected speed ($n_{E-motor}$) of the electric motor (16), the speed difference ($\Delta n$) and the gear ratio and axle differential ratio ($i_G$, $i_A$) for both wheels (12-1, 12,2, 12-3, 12-4) of the axle, and wherein an actual wheel speed ($n_{wheel,actual}$) of the wheels (12-1, 12,2, 12-3, 12-4) of the axle is determined from the current driving speed ($V_{vehicle}$) of the motor vehicle (10), wherein if the theoretical wheel speed ($n_{wheel,theo}$) of one or both wheels (12-1, 12,2 / 12-3, 12-4) deviates from the actual wheel speed ($n_{wheel,actual}$), it is determined as wheel slip information that the wheel in question or both wheels (12-1, 12,2 / 12-3, 12-4) of the axle is/are slipping, wherein the theoretical wheel speed ($n_{wheel,theo}$) of the wheels (12-1, 12,2, 12-3, 12-4) of the axle is calculated according to the formula

EP 3 681 749 B1

$$n_{Rad,theo} = \frac{1}{2}\left(\frac{n_{E-Motor}}{i_G i_A} \pm \Delta n\right)$$

and
the actual wheel speed ($n_{wheel,actual}$) of the wheels (12-1, 12,2, 12-3, 12-4) of the axle is calculated according to the formula

$$n_{Rad,Ist} = \frac{V_{Fahrzeug}}{\pi d_{Rad}} \text{ wherein } d_{wheel} = \text{diameter of the wheel}$$

3. Method according to claim 1 or 2,
   **characterised in that**
   the speed ($n_{E-motor}$) of the electric motor (14) is determined from the current profile and/or voltage drop and/or from information about control of the motor.

4. Method according to claim 1 or 2,
   **characterised in that**
   the speed ($n_{E-motor}$) of the electric motor (14) is determined using a sensor.

5. Method according to claim 1,
   **characterised in that**

   the theoretical wheel speed ($n_{wheel,theo}$) of the wheel (12-1, 12,2, 12-3, 12-4) is calculated according to the formula

$$n_{Rad,theo} = \frac{n_{E-motor}}{i_G}$$

   and
   the actual wheel speed ($n_{wheel,actual}$) of the wheel (12-1, 12,2 / 12-3, 12-4) is calculated according to the formula

$$n_{Rad,Ist} = \frac{V_{Fahrzeug}}{\pi d_{Rad}} \qquad \text{wherein } d_{wheel} = \text{diameter of the wheel}$$

6. Method according to claim 1 or 2,
   **characterised in that**
   the actual wheel speed ($n_{wheel,actual}$) deviates from the theoretical wheel speed if the following applies to wheel speeds:

$$n_{Rad,ist} \leq 0.9 n_{Rad,theo} \qquad \text{or } n_{Rad,Ist} \geq 1.1 n_{Rad,theo} \cdot$$

**Revendications**

1. Procédé de détermination d'une information de patinage de roue d'une roue à entraînement électrique (12-1, 12-2, 12-3, 12-4) d'un véhicule automobile (10), selon lequel, pendant la conduite, le régime ($n_{E-moteur}$) d'un moteur électrique (16) entraînant la roue (12-1, 12-2, 12-3, 12-4) est détecté et le régime détecté ($n_{E-moteur}$) du moteur électrique (16) est utilisé pour déterminer l'information de patinage de roue, **caractérisé en ce que** un moteur électrique séparé (14) est associé à chaque roue à entraînement électrique (12-1, 12-2, 12-3, 12-4), dans lequel un régime de roue théorique ($n_{roue,théo}$) de la roue (12-1, 12-2, 12-3, 12-4) est déterminé à partir du régime détecté ($n_{E-moteur}$) du moteur électrique (14) et du rapport de transmission (iG), et dans lequel un régime de roue réel ($n_{roue,réel}$) de la roue (12 -1, 12-2, 12-3, 12-4) est déterminé à partir de la vitesse de conduite actuelle ($V_{véhicule}$) du véhicule automobile (10), dans lequel il est déterminé comme information de patinage de roue, dans le cas où le régime de roue théorique ($n_{roue,théo}$) de la roue (12-1, 12-2, 12 -3, 12- 4) s'écarte du régime de roue réel ($n_{roue,réel}$) de la roue (12-1, 12-2, 12-3, 12-4), que la roue (12-1, 12- 2, 12-3, 12-4) se trouve en situation de

7

patinage.

2. Procédé de détermination d'une information de patinage de roue d'une roue à entraînement électrique (12-1, 12-2, 12-3, 12-4) d'un véhicule automobile (10), selon lequel, pendant la conduite, le régime (nE -moteur) d'un moteur électrique (16) entraînant la roue (12-1, 12-2, 12-3, 12-4) est détecté et le régime détecté (nE -moteur) du moteur électrique (16) est utilisé pour déterminer l'information de patinage de roue,
**caractérisé en ce que**

les roues (12-1, 12,2, 12-3, 12-4) d'un essieu sont entraînées via un moteur électrique commun (14) et un différentiel d'essieu (16), et une différence de régime ($\Delta$n) due au différentiel d'essieu (16) est détectée entre les roues (12-1, 12,2, 12-3, 12-4) de l'essieu, dans lequel un régime de roue théorique ($n_{roue,théo}$) est déterminé à partir du régime détecté ($n_{E-moteur}$) du moteur électrique (16), de la différence de régime ($\Delta$n) ainsi que du rapport de transmission et de différentiel d'essieu ($i_G$, $i_A$) pour les deux roues (12-1, 12,2, 12-3, 12-4) de l'essieu, et dans lequel un régime de roue réel ($n_{roue,réel}$) des roues (12-1, 12,2, 12-3, 12-4) de l'essieu est déterminé à partir de la vitesse de conduite actuelle ($V_{véhicule}$) du véhicule automobile (10), dans lequel il est déterminé comme information de patinage de roue, dans le cas où le régime de roue théorique ($n_{roue,théo}$) d'une ou des deux roues (12-1, 12,2 / 12-3, 12-4) s'écarte du régime de roue réel ($n_{roue,réel}$), que la roue concernée ou les deux roues (12-1, 12,2 / 12-3, 12-4) de l'essieu se trouve(nt) en situation de patinage, dans lequel le régime de roue théorique ($n_{roue,théo}$) des roues (12-1, 12,2, 12-3, 12-4) de l'essieu est calculé selon la formule

$$n_{roue,théo} = \frac{1}{2}\left(\frac{n_{E-moteur}}{i_G i_A} \pm \Delta n\right)$$

et
le régime de roue réel ($n_{roue,réel}$) des roues (12-1, 12,2, 12-3, 12-4) de l'essieu est calculé selon la formule

$$n_{roue,réel} = \frac{V_{véhicule}}{\pi d_{roue}} \text{ dans laquelle } d_{roue} = \text{diamètre de la roue.}$$

3. Procédé selon la revendication 1 ou 2,
**caractérisé en ce que**
le régime ($n_{E-moteur}$) du moteur électrique (14) est déterminé à partir de la courbe de courant et/ou de la chute de tension et/ou à partir d'informations de la commande de moteur.

4. Procédé selon la revendication 1 ou 2,
**caractérisé en ce que**
le régime ($n_{E-moteur}$) du moteur électrique (14) est déterminé par l'intermédiaire d'un capteur.

5. Procédé selon la revendication 1,
**caractérisé en ce que**

le régime de roue théorique ($n_{roue,théo}$) de la roue (12-1, 12,2, 12-3, 12-4) est calculé selon la formule

$$n_{roue,théo} = \frac{n_{E-moteur}}{i_G}$$

et
le régime de roue réel ($n_{roue,réel}$) de la roue (12-1, 12,2/12-3, 12-4) est calculé selon la formule

$$n_{roue,réel} = \frac{V_{véhicule}}{\pi d_{roue}} \qquad \text{dans laquelle } d_{roue} = \text{diamètre de la roue.}$$

6. Procédé selon la revendication 1 ou 2,
**caractérisé en ce que**
le régime de roue réel ($n_{roue,réel}$) s'écarte du régime de roue théorique si les conditions suivantes s'appliquent aux

régimes de roue :

$$n_{roue,réel} \leq 0.9 n_{roue,théo} \quad ou\ n_{roue,réel} \geq 1.1 n_{roue,théo}\ .$$

Fig. 1

**IN DER BESCHREIBUNG AUFGEFÜHRTE DOKUMENTE**

**In der Beschreibung aufgeführte Patentdokumente**

- US 20170247035 A1

- EP 3020598 A1